# EUROPEAN PATENT APPLICATION

(11) **EP 4 760 111 A1**
(43) Date of publication of application: **17.06.2026**
(21) Application number: 25770213.4
(22) Date of filing: 02.09.2025
(51) Int. Cl.: F04D 27/00, G06F 1/20, G06F 11/30

(54) **FAN CONTROL METHOD, STORAGE MEDIUM, ELECTRONIC DEVICE, AND COMPUTER PROGRAM PRODUCT**

(30) Priority: 25.09.2024 CN 202411343003
(71) Applicant: Suzhou Metabrain Intelligent Technology Co., Ltd., Suzhou, Jiangsu 215000 (CN)
(72) Inventor: WANG, Xiangyu, Suzhou, Jiangsu 215000 (CN); ZHANG, Xiubo, Suzhou, Jiangsu 215000 (CN); JI, Yintao, Suzhou, Jiangsu 215000 (CN)
(74) Representative: Studio Torta S.p.A.
(86) International application number: PCT/CN2025/118539
(87) International publication number: WO 2026/066942

(57) **Abstract**

Embodiments of this application provide a method for controlling a fan, a storage medium, an electronic device, and a computer program product, and relate to the computer field. The method for controlling the fan includes: temperature information of N temperature sensors in a server is acquired, where N is a positive integer greater than or equal to 2; in a case that temperature information of M temperature sensors among the N temperature sensors is abnormal, M pieces of alternative temperature information corresponding to the M temperature sensors are acquired, where a m(th) piece of alternative temperature information among the M pieces of alternative temperature information is used to reflect a temperature of a monitored object corresponding to a m(th) temperature sensor among the M temperature sensors, and M is a positive integer greater than or equal to 1 and less than or equal to N; and a fan speed value is determined according to temperature information of N-M temperature sensors and the M pieces of alternative temperature information, and a fan of the server is controlled to rotate at the fan speed value.

## Description

### Cross-Reference to Related Application

This application claims priority to patent document filed on September 25, 2024, with Application No. 2024113430035, and entitled " METHOD FOR CONTROLLING FAN, STORAGE MEDIUM, ELECTRONIC DEVICE, AND COMPUTER PROGRAM PRODUCT", which is incorporated herein by reference in its entirety.

### Technical Field

Embodiments of this application relate to the computer field, and specifically, to a method for controlling a fan, a storage medium, an electronic device, and a computer program product.

### Background

As important components of a server system, fans are used to perform heat dissipation on internal components of the server through rotation, thereby ensuring the normal operation of the server. In the related art, a controller calculates the fan speed value based on the temperature of the components of the server, and then controls the fan to rotate according to the fan speed value. However, when the temperature of the internal components of the server is abnormal, the speed value calculated by the controller is inaccurate, thereby affecting the heat dissipation of the server.

In the related art, there is currently no effective solution proposed for a problem that the rotation of the fan may not be accurately controlled when the temperature of components inside a server is abnormal.

### Summary

Embodiments of this application provide a method for controlling a fan, a storage medium, an electronic device, and a computer program product, to at least solve a problem that the rotation of a fan may not be accurately controlled when the temperature of components inside a server is abnormal.

According to an embodiment of this application, a method for controlling a fan is provided and includes: temperature information of N temperature sensors in a server is acquired, where N is a positive integer greater than or equal to 2, and monitored objects of the N temperature sensors include components of the server and/or an environment in which the server is located; in a case that temperature information of M temperature sensors among the N temperature sensors is abnormal, M pieces of alternative temperature information corresponding to the M temperature sensors are acquired, where a m(th) piece of alternative temperature information among the M pieces of alternative temperature information is used to reflect a temperature of a monitored object corresponding to a m(th) temperature sensor among the M temperature sensors, and M is a positive integer greater than or equal to 1 and less than or equal to N; and a fan speed value is determined according to temperature information of N-M temperature sensors and the M pieces of alternative temperature information, and a fan of the server is controlled to rotate at the fan speed value.

In an exemplary embodiment, the M pieces of alternative temperature information corresponding to the M temperature sensors are acquired includes: according to a position of the monitored object of the m(th) temperature sensor among the M temperature sensors, a temperature detector on a mainboard of the server is determined, where a distance between the temperature detector and the monitored object is less than a preset distance; and according to temperature information of the temperature detector, alternative temperature information corresponding to the m(th) temperature sensor is determined.

In an exemplary embodiment, the fan speed value is determined according to the temperature information of N-M temperature sensors and the M pieces of alternative temperature information includes: a j(th) speed value is determined according to temperature information of a j(th) temperature sensor among the N-M temperature sensors, to obtain N-M speed values, where j is 1, ..., N-M-1, and N-M; M speed values are determined according to the M pieces of alternative temperature information; and a maximum speed value among the N-M speed values and the M speed values is determined as the fan speed value.

In an exemplary embodiment, the j(th) speed value is determined according to the temperature information of the j(th) temperature sensor among the N-M temperature sensors includes: the j(th) speed value is determined according to a proportional-integral-derivative control algorithm and the temperature information of the j(th) temperature sensor among the N-M temperature sensors.

In an exemplary embodiment, before the j(th) speed value is determined according to the temperature information of the j(th) temperature sensor among the N-M temperature sensors, the method further includes: a time difference between a j(th) reference time point and a j(th) time point is determined to obtain a j(th) time difference, where the j(th) time point is a time point when the temperature information of a j(th) temperature sensor is acquired, and the j(th) reference time point is a start time point when the j(th) speed value is determined according to the temperature information of the j(th) temperature sensor; and a j(th) temperature compensation amount is determined according to the j(th) time difference, and compensation processing is performed on the temperature information of the j(th) temperature sensor according to the j(th) temperature compensation amount to update the temperature information of the j(th) temperature sensor which is acquired.

In an exemplary embodiment, the j(th) temperature compensation amount is determined according to the j(th) time difference and the compensation processing is performed on the temperature information of the j(th) temperature sensor according to the j(th) temperature compensation amount includes: a j(th) first time threshold corresponding to the j(th) temperature sensor is determined; in a case that the j(th) time difference is greater than or equal to the j(th) first time threshold, the j(th) temperature compensation amount is determined according to the j(th) time difference, and compensation processing is performed on the temperature information of the j(th) temperature sensor according to the j(th) temperature compensation amount; and in a case that the j(th) time difference is less than the j(th) first time threshold, the compensation processing is not performed on the temperature information of the j(th) temperature sensor.

In an exemplary embodiment, the j(th) temperature compensation amount is determined according to the j(th) time difference and the compensation processing is performed on the temperature information of the j(th) temperature sensor according to the j(th) temperature compensation amount includes: a j(th) second time threshold corresponding to the j(th) temperature sensor is determined, where the j(th) second time threshold is greater than the j(th) first time threshold; in a case that the j(th) time difference is greater than or equal to the j(th) first time threshold and less than the j(th) second time threshold, the j(th) temperature compensation amount is determined according to the j(th) time difference, and the compensation processing is performed on the temperature information of the j(th) temperature sensor according to the j(th) temperature compensation amount.

In an exemplary embodiment, the method further includes: in a case that the j(th) time difference is greater than or equal to the j(th) second time threshold, an importance degree of the temperature information of the j(th) temperature sensor is determined according to attribute information of the j(th) temperature sensor; and the j(th) speed value is determined according to the importance degree of the temperature information of the j(th) temperature sensor, and the j(th) speed value is prohibited from being determined according to the temperature information of the j(th) temperature sensor among the N-M temperature sensors.

In an exemplary embodiment, the j(th) temperature compensation amount is determined according to the j(th) time difference includes: a first change rate of a temperature detected by the j(th) temperature sensor within a preset time period before the j(th) time point is determined; and the first change rate is multiplied by the j(th) time difference to obtain the j(th) temperature compensation amount.

In an exemplary embodiment, after the maximum speed value among the N-M speed values and the M speed values is determined as the fan speed value, the method further includes: a target time point is determined, where the target time point is a start time point when the fan speed value is determined according to the temperature information of the N-M temperature sensors and the M pieces of alternative temperature information; a time difference between a specified time point and the target time point is determined to obtain a target time difference, where the specified time point is a time point when the fan of the server is to be controlled to rotate according to a determined speed value; and a speed value compensation amount is determined according to the target time difference, and compensation processing is performed on the fan speed value according to the speed value compensation amount to update the fan speed value.

In an exemplary embodiment, the speed value compensation amount is determined according to the target time difference and the compensation processing is performed on the fan speed value according to the speed value compensation amount includes: in a case that the target time difference is greater than or equal to a first preset threshold, the speed value compensation amount is determined according to the target time difference, and the compensation processing is performed on the fan speed value according to the speed value compensation amount; and in a case that the target time difference is less than the first preset threshold, the compensation processing is not performed on the fan speed value.

In an exemplary embodiment, the speed value compensation amount is determined according to the target time difference and the compensation processing is performed on the fan speed value according to the speed value compensation amount includes: in a case that the target time difference is greater than or equal to the first preset threshold and less than a second preset threshold, the speed value compensation amount is determined according to the target time difference, and the compensation processing is performed on the fan speed value according to the speed value compensation amount, where the second preset threshold is greater than the first preset threshold.

In an exemplary embodiment, the method further includes: in a case that the target time difference is greater than or equal to the second preset threshold, the fan speed value is updated to the maximum speed value of the fan of the server.

In an exemplary embodiment, the speed value compensation amount is determined according to the target time difference includes: a second change rate of a speed of the fan of the server within a preset time period before the specified time point is determined; and the second change rate is multiplied by the target time difference to obtain the speed value compensation amount.

In an exemplary embodiment, the method further includes: in a case that only P pieces of alternative temperature information corresponding to P temperature sensors among the M temperature sensors are acquired, a first speed value is determined according to attribute information of M-P temperature sensors, and a second speed value is determined according to the temperature information of the N-M temperature sensors and the P pieces of alternative temperature information, where P is an integer greater than or equal to 0 and less than M, and the attribute information of the temperature sensors is used to indicate the monitored objects of the temperature sensors; and the fan of the server is controlled to rotate at a target speed value, where the target speed value is a maximum value between the first speed value and the second speed value.

In an exemplary embodiment, the first speed value is determined according to the attribute information of the M-P temperature sensors includes: an abnormal temperature level of the server is determined according to the attribute information of the M-P temperature sensors to obtain a target abnormal temperature level, and a target speed value calculation algorithm corresponding to the target abnormal temperature level is determined according to the target abnormal temperature level; and the first speed value is determined according to the target speed value calculation algorithm and an average temperature of a chassis of the server.

In an exemplary embodiment, the abnormal temperature level of the server is determined according to the attribute information of the M-P temperature sensors includes: M-P abnormal temperature levels corresponding to the M-P temperature sensors are determined according to the attribute information of the M-P temperature sensors, where an abnormal temperature level of an i(th) temperature sensor among the M-P temperature sensors is determined according to attribute information of the i(th) temperature sensor, and i is a positive integer greater than or equal to 1 and less than or equal to M-P; and a highest level among the M-P abnormal temperature levels is determined as the target abnormal temperature level.

According to another embodiment of this application, an apparatus for controlling a fan is further provided and includes: a first acquisition module, configured to acquire temperature information of N temperature sensors in a server, where N is a positive integer greater than or equal to 2, and monitored objects of the N temperature sensors include components of the server and/or an environment in which the server is located; a second acquisition module, configured to in a case that temperature information of M temperature sensors among the N temperature sensors is abnormal, acquire M pieces of alternative temperature information corresponding to the M temperature sensors, where a m(th) piece of alternative temperature information among the M pieces of alternative temperature information is used to reflect a temperature of a monitored object corresponding to a m(th) temperature sensor among the M temperature sensors, and M is a positive integer greater than or equal to 1 and less than or equal to N; and a controlling module, configured to determine a fan speed value according to temperature information of N-M temperature sensors and the M pieces of alternative temperature information, and control a fan of the server to rotate at the fan speed value.

According to another embodiment of this application, a non-transitory computer-readable storage medium is further provided. The non-transitory computer-readable storage medium stores a computer program. When the computer program is set to be run, steps in any one of the method embodiments are implemented.

According to another embodiment of this application, an electronic device is further provided, including a memory and a processor. The memory stores a computer program. The processor is set to run the computer program to perform steps in any one of the foregoing method embodiments.

According to another embodiment of this application, a computer program product is further provided, and the computer program product includes a computer program. When the computer program is executed by a processor, steps in any one of the method embodiments are implemented.

In this application, when the M temperature sensors do not read temperature information or encounter other malfunctions, corresponding alternative temperature information may be used to calculate the fan speed value, so that the fan speed value calculated by the controller is more accurate, that is, the rotation of the fan may be more accurately controlled. Thus, this application solves a problem that the rotation of the fan may not be accurately controlled when the temperature of components inside a server is abnormal.

### Brief Description of the Drawings

The accompanying drawings that constitute a part of this application are used to further understand this application. The schematic embodiments of this application and their descriptions are used to explain this application, instead of constituting undue limitations on this application. In the accompanying drawings:
FIG. 1 is a block diagram of a hardware structure of a server device for a method for controlling a fan according to an embodiment of this application;
FIG. 2 is a flowchart of a method for controlling a fan according to an embodiment of this application;
FIG. 3 is a schematic diagram illustrating anomaly of an optional component temperature sensor according to an embodiment of this application;
FIG. 4 is a schematic diagram of an optional fan device according to an embodiment of this application;
FIG. 5 is a schematic diagram illustrating an optional relationship between fan speed and temperature according to an embodiment of this application;
FIG. 6 is a schematic diagram of an optional device for controlling rotation of a fan according to an embodiment of this application;
FIG. 7 is a flowchart of an optional method for controlling rotation of a fan according to an embodiment of this application;
FIG. 8 is a flowchart of another optional method for controlling rotation of a fan according to an embodiment of this application;
FIG. 9 is a block diagram of a structure of an apparatus for controlling a fan according to an embodiment of this application; and
FIG. 10 is a structural schematic diagram of an optional electronic device according to an embodiment of this application.

### Detailed Description of the Embodiments

The following describes embodiments of this application in detail with reference to accompanying drawings and embodiments.

It should be noted that, in the specification, claims, and accompanying drawings of this application, terms "first", "second", and the like are intended to distinguish between similar objects, but do not necessarily describe a specific order or sequence.

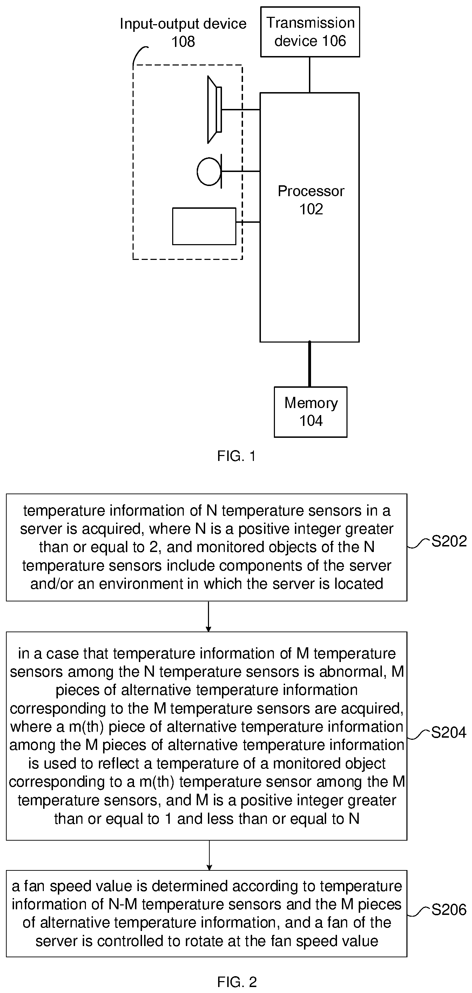

Embodiments of a method for controlling a fan provided in the embodiments of this application may be performed on a server device or a similar arithmetic device. For example, the method embodiments are run on the server device. FIG. 1 is a block diagram of a hardware structure of a server device for a method for controlling a fan according to an embodiment of this application. As shown in FIG. 1, the server device may include one or more (only one is shown in FIG. 1) processors 102 (the processor 102 may include but is not limited to a processing apparatus like a microcontroller unit (MCU) or a field programmable logic gate (FPGA) (Field Programmable Gate Array)) and a memory 104 configured to store data. The server device may further include a transmission device 106 configured for a communication function and an input-output device 108. A person of ordinary skill in the art may understand that the structure shown in FIG. 1 is merely an example, and does not constitute a limitation on the structure of the server device. For example, the server device may also include more or fewer components than those shown in FIG. 1, or have a configuration different from that shown in FIG. 1.

The memory 104 may be configured to store a computer program, for example, a software program and a module of application software, for example, a computer program corresponding to a method for controlling a fan in the embodiments of this application. The processor 102 runs the computer program stored in the memory 104, to perform various function applications and data processing, that is, implement the method. The memory 104 may include a high-speed random access memory, and may further include a non-transitory memory, for example, one or more magnetic storage devices, a flash memory, or another non-transitory solid-state memory. In some instances, the memory 104 may further include memories disposed remotely relative to the processor 102. These remote memories may be connected to the server device through a network. Instances of the network include but are not limited to the Internet, an intranet, a local area network, a mobile communication network, and a combination thereof.

The transmission device 106 is configured to receive or send data through a network. A specific instance of the network may include a wireless network provided by a communications provider of the server device. In an instance, the transmission device 106 includes a network interface controller (Network Interface Controller, NIC for short), and may be connected to another network device via a base station to communicate with the Internet. In an instance, the transmission device 106 may be a radio frequency (Frequency, RF for short) module, and is configured to communicate with the Internet in a wireless manner.

To solve the problems, the embodiment provides a method for controlling a fan. As shown in FIG. 2, the method includes the following steps S202 to S206.

Step S202: temperature information of N temperature sensors in a server is acquired, where N is a positive integer greater than or equal to 2, and monitored objects of the N temperature sensors include components of the server and/or an environment in which the server is located.

Optionally, in the embodiment of this application, an execution subject of the method for controlling the fan is a controller, and the controller is a baseboard management controller (Baseboard Management Controller, BMC for short).

Optionally, among the N temperature sensors, the monitored objects of some or all temperature sensors may be identical or different.

Optionally, the controller in the server monitors the temperature of various components of the server and the environment in real time via N temperature sensors. The server components include but are not limited to: hard disks, network interface cards, the controller on the mainboard of the server, and the like. Each temperature sensor monitors different components, thereby ensuring that the server monitors the temperature of all components. Abnormalities may be timely handled if any.

Optionally, in a case that the controller determines that temperature information of M temperature sensors among the N temperature sensors is abnormal, the controller may send alarm information.

Step S204: in a case that temperature information of M temperature sensors among the N temperature sensors is abnormal, M pieces of alternative temperature information corresponding to the M temperature sensors are acquired, where a m(th) piece of alternative temperature information among the M pieces of alternative temperature information is used to reflect a temperature of a monitored object corresponding to a m(th) temperature sensor among the M temperature sensors, and M is a positive integer greater than or equal to 1 and less than or equal to N.

Step S206: a fan speed value is determined according to temperature information of N-M temperature sensors and the M pieces of alternative temperature information, and a fan of the server is controlled to rotate at the fan speed value.

Through the above steps, when the M temperature sensors do not read temperature information or encounter other malfunctions, corresponding alternative temperature information may be used to calculate the fan speed value, so that the fan speed value calculated by the controller is more accurate, that is, the rotation of the fan may be more accurately controlled. Thus, this application solves a problem that the rotation of the fan may not be accurately controlled when the temperature of components inside a server is abnormal. This ensures that the system does not overheat due to remain at an abnormal temperature for a long time, and the heat dissipation system of the server may still function effectively, thereby avoiding a decrease in heat dissipation efficiency, and enhancing the stability and fault tolerance of the system.

In an exemplary embodiment, the M pieces of alternative temperature information corresponding to the M temperature sensors are acquired by the following steps S11 and S12.

Step S11: according to a position of the monitored object of the m(th) temperature sensor among the M temperature sensors, a temperature detector on a mainboard of the server is determined, where a distance between the temperature detector and the monitored object is less than a preset distance.

Step S12: according to temperature information of the temperature detector, alternative temperature information corresponding to the m(th) temperature sensor is determined.

Optionally, a plurality of temperature detectors may be provided.

Optionally, it is assumed that temperature information of a temperature detectors exists, where a is greater than or equal to 2, alternative temperature information corresponding to a (m)th temperature sensor is an average temperature corresponding to the temperature information of the a temperature detectors.

In an exemplary embodiment, the fan speed value is determined by the following steps S21 to S23 according to the temperature information of N-M temperature sensors and the M pieces of alternative temperature information:
Step S21: a j(th) speed value is determined according to temperature information of a j(th) temperature sensor among the N-M temperature sensors, to obtain N-M speed values, where j is 1, ..., N-M-1, and N-M.
Step S22: M speed values are determined according to the M pieces of alternative temperature information.

It should be noted that a method for determining the j(th) speed value according to the temperature information of the j(th) temperature sensor among the N-M temperature sensors is identical to a method for determining a (m)th speed value among the M speed values according to a (m)th piece of alternative temperature information among the M pieces of alternative temperature information.

Step S23: a maximum speed value among the N-M speed values and the M speed values is determined as the fan speed value.

In an exemplary embodiment, the j(th) speed value is determined by the following steps according to the temperature information of the j(th) temperature sensor among the N-M temperature sensors: the j(th) speed value is determined according to a proportional-integral-derivative control algorithm and the temperature information of the j(th) temperature sensor among the N-M temperature sensors.

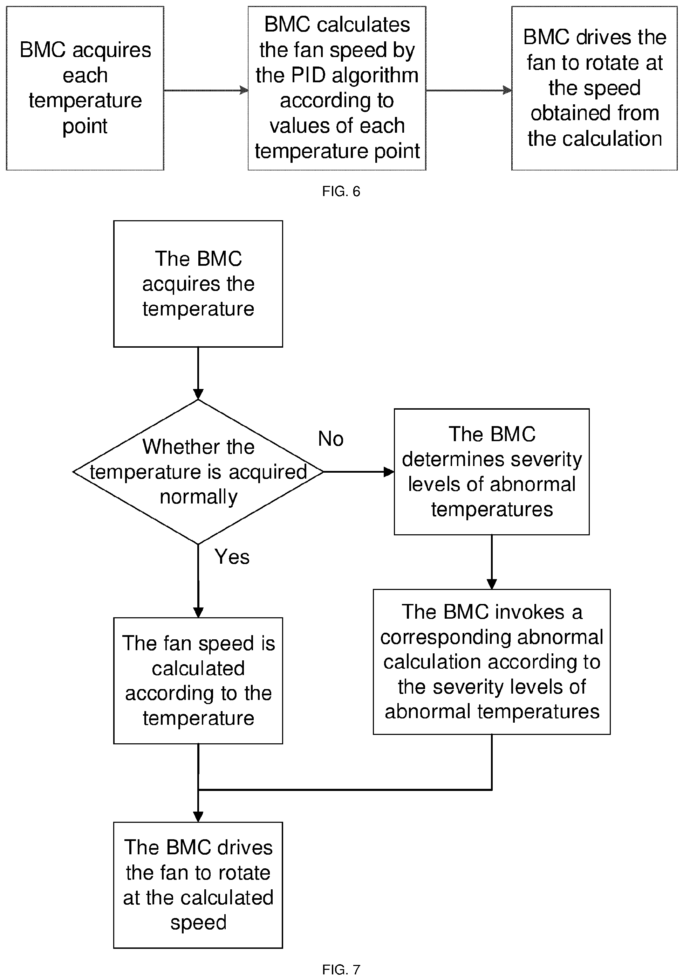

Optionally, referring to FIG. 6, the proportional-integral-derivative (Proportional-Integral-Derivative, PID for short) control algorithm is used to calculate the corresponding speed value in real time according to a preset formula and the speed adjustment parameters and temperature information of the N-M temperature sensors.

Optionally, the preset formula is: u(t)=kP(e(t)+1/T1∫e(t)dt+TD*(de(t)/dt)); where u(t) represents an output signal generated by the controller, namely, the speed value; kP represents a proportional gain, which controls the strength of a proportional term and determines the direct influence of an error (e(t)) on the output (u(t)); e(t) represents an error signal; 1/T1 represents a gain of an integral term, where T1 represents an integral time constant; ∫e(t)dt represents an integral of the error signal (e(t)), and the integral term ensures that the output of the controller is adjusted with the error accumulated over time; TD represents a derivative time constant that controls the strength of a derivative term, and the derivative term is to predict future error changes to reduce overshoot in a response process; and de(t)/dt represents a derivative of the error signal (e(t)), namely, an error change rate over time.

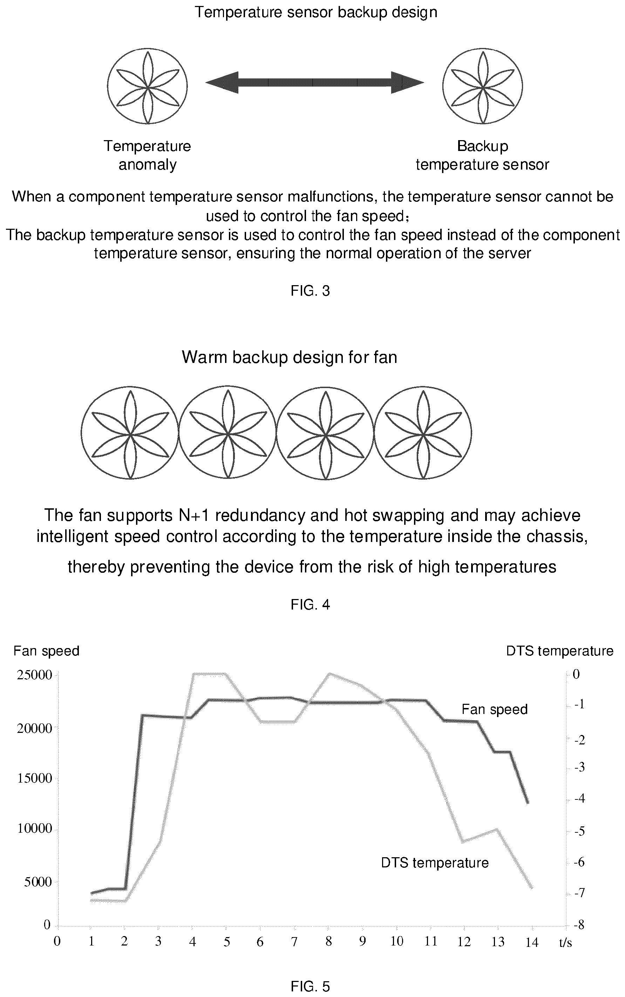

Optionally, FIG. 5 shows a relationship between the speed value and the temperature calculated by the PID algorithm. It may be seen that as the temperature (known from the temperature information) increases, the fan speed increases correspondingly.

It should be noted that the PID control algorithm is used to calculate the speed value in a more complex manner that is better adapted to a dynamic system in consideration of current values, past values (the integral term), and future values (the derivative term) of the error. During heat dissipation control, this helps the system reach the target temperature more quickly, maintain stability, and reduce unnecessary fluctuations in fan speed.

In an exemplary embodiment, before the j(th) speed value is determined according to the temperature information of a j(th) temperature sensor among the N-M temperature sensors, the method further includes the following steps S31 and S32.

Step S31: a time difference between a j(th) reference time point and a j(th) time point is determined to obtain a j(th) time difference, where the j(th) time point is a time point when the temperature information of a j(th) temperature sensor is acquired, and the j(th) reference time point is a start time point when the j(th) speed value is determined according to the temperature information of the j(th) temperature sensor.

Optionally, the j(th) time point is a time point when the controller sends an acquisition instruction to the j(th) temperature sensor, where the acquisition instruction is used to instruct to acquire the temperature information of the j(th) temperature sensor.

Optionally, when acquiring the temperature information of the j(th) temperature sensor, the controller acquires a timestamp record and stores the timestamp record in a transitory memory and/or non-transitory memory of the server, thus obtaining a time point of the temperature information of the j(th) temperature sensor.

Step S32: a j(th) temperature compensation amount is determined according to the j(th) time difference, and compensation processing is performed on the temperature information of the j(th) temperature sensor according to the j(th) temperature compensation amount to update the acquired temperature information of the j(th) temperature sensor.

It should be noted that there will be a time period from a time point when the temperature information of the j(th) temperature sensor is acquired to a start time point when the j(th) speed value is determined according to the temperature information of the j(th) temperature sensor. If a significant temperature change occurs within this time period, this leads to a large difference between the temperature information detected by the j(th) temperature sensor at the j(th) reference time point and the temperature information detected by the j(th) temperature sensor at the j(th) time point. This results in inaccuracy of the determined fan speed value. Furthermore, in order to determine the speed value of the fan more accurately, the j(th) temperature compensation amount needs to be determined according to the j(th) time difference, and compensation processing is performed on the temperature information of the j(th) temperature sensor according to the j(th) temperature compensation amount.

In an exemplary embodiment, the j(th) temperature compensation amount is determined according to the j(th) time difference, and the compensation processing is performed on the temperature information of the j(th) temperature sensor according to the j(th) temperature compensation amount. The above operations may be implemented by the following steps S41 and S42.

Step S41: a j(th) first time threshold corresponding to the j(th) temperature sensor is determined.

Step S42: in a case that the j(th) time difference is greater than or equal to the j(th) first time threshold, the j(th) temperature compensation amount is determined according to the j(th) time difference, and the compensation processing is performed on the temperature information of the j(th) temperature sensor according to the j(th) temperature compensation amount; and in a case that the j(th) time difference is less than the j(th) first time threshold, no compensation processing is performed on the temperature information of the j(th) temperature sensor.

Optionally, compensation processing on the temperature information may be selectively triggered threshold-based compensation. In other words, a reasonable first time threshold is determined according to an abnormal temperature level. For example, the processor is a relatively important component, and compensation is activated when the temperature information of the processor is delayed by 100 milliseconds (namely, a first preset threshold), and compensation is activated only when the temperature information of other components is delayed by 1 second.

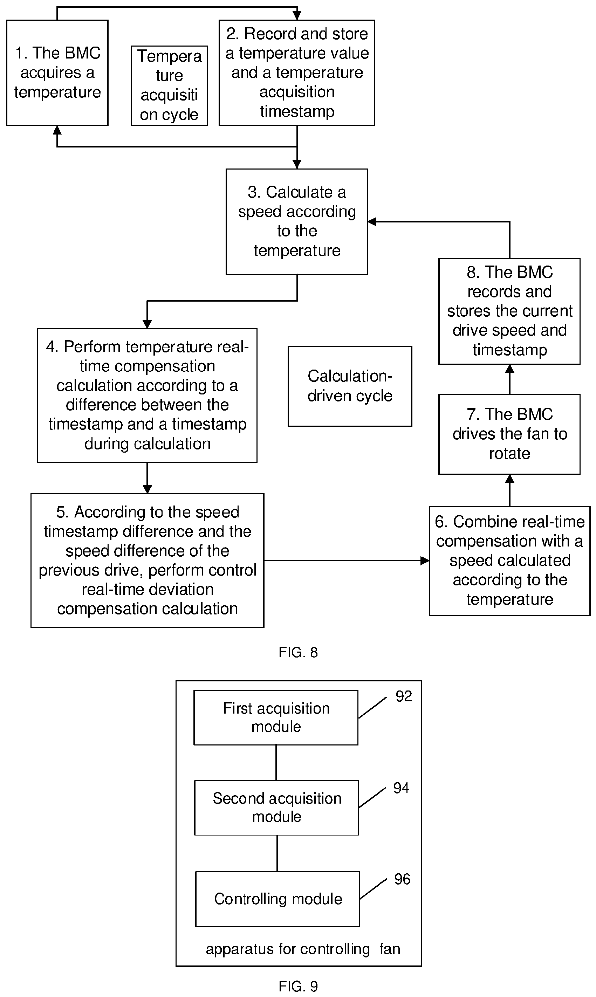

It should be noted that, referring to FIG. 8, a significant time delay may be observed in the server system. If the j(th) time difference is greater than or equal to the j(th) first time threshold, this indicates a relatively long time period from the time point when the temperature information of the j(th) temperature sensor is acquired to the start time point when the j(th) speed value is determined according to the temperature information of the j(th) temperature sensor. In this case, the temperature information of the j(th) temperature sensor is very likely to have undergone significant changes. Furthermore, in order to determine the fan speed value more accurately, compensation processing needs to be performed on the temperature information of the j(th) temperature sensor.

In an exemplary embodiment, the j(th) temperature compensation amount is determined according to the j(th) time difference, and the compensation processing is performed on the temperature information of the j(th) temperature sensor according to the j(th) temperature compensation amount. The above operations may be implemented by the following steps S51 and S52.

Step S51: a j(th) second time threshold corresponding to the j(th) temperature sensor is determined, where the j(th) second time threshold is greater than the j(th) first time threshold.

Step S52: in a case that the j(th) time difference is greater than or equal to the j(th) first time threshold and less than the j(th) second time threshold, the j(th) temperature compensation amount is determined according to the j(th) time difference, and the compensation processing is performed on the temperature information of the j(th) temperature sensor according to the j(th) temperature compensation amount.

It should be noted that the second time threshold is preset to ensure that the j(th) temperature compensation amount is valid; that is, compensation processing is performed on the temperature information of the j(th) temperature sensor within a short time period, and the speed value derived from the compensated temperature information is valid.

In an exemplary embodiment, the method further includes the following steps S61 and S62.

Step S61: in a case that the j(th) time difference is greater than or equal to the j(th) second time threshold, an importance degree of the temperature information of the j(th) temperature sensor is determined according to attribute information of the j(th) temperature sensor.

Step S62: the j(th) speed value is determined according to the importance degree of the temperature information of the j(th) temperature sensor, and the j(th) speed value is prohibited from being determined according to the temperature information of the j(th) temperature sensor among the N-M temperature sensors.

Optionally, the j(th) speed value may be the maximum speed value, namely, the maximum speed value of the fan.

In an exemplary embodiment, the method further includes the following steps S61 and S63. The step S63 includes: a compensation speed value of the j(th) speed value is determined according to the importance degree of the temperature information of the j(th) temperature sensor. After the j(th) speed value is determined according to the temperature information of the j(th) temperature sensor, the j(th) speed value is added to the compensation speed value of the j(th) speed value to update the j(th) speed value.

It should be noted that when the j(th) time difference is greater than or equal to the j(th) second time threshold, this indicates a relatively long time period from the time point when the temperature information of the j(th) temperature sensor is acquired to the start time point when the j(th) speed value is determined according to the temperature information of the j(th) temperature sensor. Even if the temperature compensation amount is calculated and/or predicted, this may still not be able to cover the actual temperature change. When the j(th) time difference exceeds the second time threshold, it should be directly determined as an invalid temperature, the heat dissipation mode enters an abnormal mode, and the fan speed is either set to the maximum fan speed or increased accordingly according to the importance of the temperature, so as to prevent the system from overheating.

In an exemplary embodiment, the j(th) temperature compensation amount is determined by the following steps S71 and S72 according to the j(th) time difference:
Step S71: a first change rate of a temperature detected by the j(th) temperature sensor within a preset time period before the j(th) time point is determined.
Step S72: the first change rate is multiplied by the j(th) time difference to obtain the j(th) temperature compensation amount.

In other words, in the embodiment, the trend of multiple previous temperature changes needs to be analyzed, for example, a temperature change slope shows a sharp increase, a relatively stable increase, or a sharp decrease. Then, a temperature change that may occur within a delay time is predicted by multiplying the change slope (namely, the first change rate) by a temperature delay (namely, the j(th) time difference). Finally, the predicted temperature change is incorporated into the PID calculation, so that calculation is more accurate.

In an exemplary embodiment, after a maximum speed value among the N-M speed values and the M speed values is determined as the fan speed value, the method further includes the following steps S81 to S83:
Step S81: a target time point is determined, where the target time point is a start time point when the fan speed value is determined according to the temperature information of the N-M temperature sensors and the M pieces of alternative temperature information.

Optionally, determining the j(th) speed value according to the temperature information of the j(th) temperature sensor and determining a (j+1)th speed value according to temperature information of a (j+1)th temperature sensor are performed asynchronously.

Optionally, determining a m(th) speed value according to m pieces of alternative temperature information and determining a (m+1)th speed value according to a (m+1)th piece of alternative temperature information are performed asynchronously.

It should be noted that the target time point is one earliest time point among multiple time points, where the multiple time points include: a start time point of the j(th) speed value determined according to the temperature information of the j(th) temperature sensor, and a start time point of the m(th) speed value determined according to m pieces of alternative temperature information.

Step S82: a time difference between a specified time point and the target time point is determined to obtain a target time difference, where the specified time point is a time point when the fan of the server is to be controlled to rotate according to a determined speed value.

Step S83: a speed value compensation amount is determined according to the target time difference, and compensation processing is performed on the fan speed value according to the speed value compensation amount to update the fan speed value.

It should be noted that there will be a time period from a start time point when the fan speed value is determined according to the temperature information of the N-M temperature sensors and the M pieces of alternative temperature information to a time point when the fan of the server is to be controlled to rotate according to the determined speed value. If a significant speed change occurs during this time period, this results in inaccuracy in the final speed used to control the rotation of the fan. Furthermore, in order to determine the speed value of the fan more accurately, the speed value compensation amount needs to be determined according to the target time difference and compensation processing is performed on the fan speed value according to the speed value compensation amount.

In an exemplary embodiment, the speed value compensation amount is determined according to the target time difference, and the compensation processing is performed on the fan speed value according to the speed value compensation amount; the above operations may be implemented by the following steps: in a case that the target time difference is greater than or equal to a first preset threshold, the speed value compensation amount is determined according to the target time difference, and the compensation processing is performed on the fan speed value according to the speed value compensation amount; and in a case that the target time difference is less than the first preset threshold, no compensation processing is performed on the fan speed value.

Optionally, the compensation processing on the speed value may be selectively triggered threshold-based compensation. In other words, a reasonable first preset threshold is determined. For example, compensation is activated when the fan speed value is delayed by 200 milliseconds (namely, the first preset threshold).

In an exemplary embodiment, the speed value compensation amount is determined according to the target time difference, and the compensation processing is performed on the fan speed value according to the speed value compensation amount; the above operations may be implemented by the following steps: in a case that the target time difference is greater than or equal to the first preset threshold and less than a second preset threshold, the speed value compensation amount is determined according to the target time difference, and the compensation processing is performed on the fan speed value according to the speed value compensation amount, where the second preset threshold is greater than the first preset threshold.

It should be noted that the second preset threshold is preset to ensure that the speed value compensation amount is valid; that is, compensation processing is performed on the fan speed value within a short time period, and the speed value derived from the compensated fan speed value is valid.

In an exemplary embodiment, the method further includes the following steps: in a case that the target time difference is greater than or equal to the second preset threshold, the fan speed value is updated to the maximum speed value of the fan of the server.

It should be noted that in the case that the target time difference is greater than or equal to the second preset threshold (for example, 10 seconds), it is inferred that the heat dissipation of the system is out of control. In this case, compensation for the fan speed value may increase the possibility of the heat dissipation failure of the system; thus, the fan of the system is forcibly enabled to maximize heat dissipation (namely, the fan speed value is updated to the maximum speed value of the fan of the server) to prevent system overheating.

In an exemplary embodiment, the speed value compensation amount is determined by the following steps S91 and S92 according to the target time difference.

Step S91: a second change rate of a speed of the fan of the server within a preset time period before the specified time point is determined.

Step S92: the second change rate is multiplied by the target time difference to obtain the speed value compensation amount.

Optionally, the trend of changes in final fan speeds from previous several instances may be analyzed, for example, a speed change slope shows a sharp increase, a relatively stable increase, or a sharp decrease. Then, the speed value compensation amount is obtained by multiplying a change slope by a calculation delay, and the obtained speed value compensation amount is used to perform compensation processing on the fan speed value.

In an exemplary embodiment, the method further includes the following steps S101 and S102:
Step S101: in a case that only P pieces of alternative temperature information corresponding to P temperature sensors among the M temperature sensors are acquired, a first speed value is determined according to attribute information of M-P temperature sensors, and a second speed value is determined according to the temperature information of the N-M temperature sensors and the P pieces of alternative temperature information, where P is an integer greater than or equal to 0 and less than M, and the attribute information of the temperature sensors is used to indicate the monitored objects of the temperature sensors.
Step S102: the fan of the server is controlled to rotate at a target speed value, where the target speed value is a maximum value between the first speed value and the second speed value.

It should be noted that through the above steps, when the M temperature sensors read only part of the alternative temperature information ( P pieces of alternative temperature information) or other faults occur, the first speed value may be determined according to the attribute information of M-P temperature sensors, and the second speed value may be determined according to the temperature information of the N-M temperature sensors and the P pieces of alternative temperature information. Then, the fan of the server is controlled to rotate at the target speed value, thus preventing the system from overheating due to prolonged exposure to temperature anomaly conditions and improving the stability and fault tolerance rate of the system.

In an exemplary embodiment, when P is equal to 0, that is, the M temperature sensors among the N temperature sensors have abnormal temperature information, and there are no M pieces of alternative temperature information corresponding to the M temperature sensors, the first speed value is determined according to the attribute information of the M temperature sensors, the second speed value is determined according to the temperature information of the N-M temperature sensors, and the fan of the server is controlled to rotate at the target speed value.

In an exemplary embodiment, the first speed value is determined by the following steps S111 and S112 according to the temperature information of M-P temperature sensors:
Step S111: an abnormal temperature level of the server is determined according to the attribute information of the M-P temperature sensors to obtain a target abnormal temperature level, and a corresponding target speed value calculation algorithm is determined according to the target abnormal temperature level.

Optionally, according to a target configuration file and the target abnormal temperature level, the corresponding target speed value calculation algorithm is determined. The target configuration file includes speed value calculation algorithms corresponding to different abnormal temperature levels, and the speed value calculation algorithms include the target speed value calculation algorithm.

Optionally, the speed value calculation algorithm includes but is not limited to:
A linear equation algorithm (that is, the speed value is calculated using a linear relationship). For example, when the target abnormal temperature level is 9, formula Y = 9X + 2 may be used, where X represents an average temperature of a chassis and Y represents a target speed value; and when the target abnormal temperature level is 1, formula Y = X + 1 may be adopted.

A multi-level step algorithm (that is, different step intervals are set based on the target abnormal temperature level of the server, and different types of speed value calculation algorithms are used in each interval). For example, when the target abnormal temperature level ranges from Level 1 to Level 3, a first-type speed value calculation formula is used; when the target abnormal temperature level ranges from Level 4 to Level 7, a second-type speed value calculation algorithm is used; and when the target abnormal temperature level ranges from Level 8 to Level 9, a third-type speed value calculation algorithm is used. Optionally, the first-type speed value calculation algorithm may be an algorithm based on the linear equation (for example, an algorithm corresponding to Level 1 is Y = 1X + 2, an algorithm corresponding to Level 2 is Y = 2X + 2, and an algorithm corresponding to Level 3 is Y = 3X + 2). The second-type speed value calculation algorithm may be an algorithm based on a quadratic equation (for example, an algorithm for Level 4 is Y = 4X² + 4, an algorithm for Level 5 is Y = 5X² + 5, an algorithm for Level 6 is Y = 6X² + 6, and an algorithm for Level 7 is Y = 7X² + 7). The third-type speed value calculation algorithm may be an algorithm based on a cubic equation (for example, an algorithm for Level 8 is Y = 8X³ + 8, and an algorithm for Level 9 is Y = 9X³ + 9).

It should be noted that the multi-level step algorithm may be more precisely adjusted according to the severity of temperature anomalies.

It should be noted that the speed value calculation algorithms corresponding to different abnormal temperature levels follow the rule of "high levels overriding lower levels". For example, under same conditions, the speed value calculated by the speed value calculation algorithm corresponding to a high abnormal temperature level is greater than that calculated by the speed value calculation algorithm corresponding to a low abnormal temperature level.

Step S112: the first speed value is determined according to the target speed value calculation algorithm and an average temperature of a chassis of the server.

Through the above steps, different speed value calculation algorithms may be adopted for different abnormal temperature levels of the server, so that the fan speed may be more precisely adjusted. This effectively responds to temperature changes in the internal or external environment of the server. Especially in server-dense environments such as data centers, heat dissipation efficiency and energy consumption may be better balanced through the method.

In an exemplary embodiment, before the first speed value is determined according to the target speed value calculation algorithm and the average temperature of the chassis of the server, the method further includes the following steps: temperatures detected by multiple temperature detectors on the mainboard of the server are acquired; and the average temperature of the chassis is determined according to the temperatures detected by the multiple temperature detectors.

Optionally, the temperatures detected by the multiple temperature detectors on the mainboard are different from those detected by the N temperature sensors.

It should be noted that through the above steps, the average temperature of the chassis may be accurately determined. Thus, when the target speed value calculation algorithm is the linear equation algorithm, the target speed value may be calculated according to the average temperature of the chassis.

In an exemplary embodiment, the abnormal temperature level of the server is determined by the following steps S121 and S122 according to the attribute information of the M-P temperature sensors:
Step S121: M-P abnormal temperature levels corresponding to the M-P temperature sensors are determined according to the attribute information of the M-P temperature sensors, where an abnormal temperature level of an i(th) temperature sensor among the M-P temperature sensors is determined according to attribute information of the i(th) temperature sensor, and i is a positive integer greater than or equal to 1 and less than or equal to M-P.
Step S122: a highest level among the M-P abnormal temperature levels is determined as the target abnormal temperature level.

Optionally, different components and environments have different temperature levels. Different temperature sensors monitor the different components and environments. According to the components and environments indicated by the attribute information of the temperature sensors, M pieces of abnormal temperature levels may be determined. The highest abnormal temperature level among the M pieces of abnormal temperature levels is selected as the abnormal temperature level of the server, namely, the target abnormal temperature level.

Optionally, temperature levels are represented by numbers, ranging from a natural number 1 to a natural number 9. Different natural numbers represent different temperature levels, with larger numbers indicating higher levels. For example, number 1 represents a lowest level (Level 1), and number 9 represents a highest level (Level 9). The temperature levels are determined according to the impact of the temperature anomalies (including temperature loss and temperature out of the set range) of the different components and environments in the server on the heat dissipation performance of the server. The great impact caused by the temperature anomalies indicates the high temperature level.

The extent of the impact of the temperature anomalies on the heat dissipation performance of the server may indicate the importance of the temperature of the components and environments monitored by the temperature sensor. For example, the temperature of the hard disk has a significant impact on the heat dissipation performance of the server. A low hard disk temperature indicates the excellent heat dissipation performance of the server. Therefore, it is extremely necessary to monitor the hard disk temperature, that is, the temperature of the hard disk is of high importance. In other words, if the hard disk experiences the temperature loss and the corresponding temperature sensor does not reflect the temperature of the hard disk, this will cause a great impact. Therefore, the temperature level of the hard disk is Level 9.

It should be noted that through the above steps, the abnormal temperature level of the server may be accurately determined, thereby enabling to quickly identify the corresponding speed calculation algorithm, controlling the rotation of the fan more efficiently, and ensuring the maximum heat dissipation efficiency of the server.

In an exemplary embodiment, the second speed value is determined according to the temperature information of the N-M temperature sensors and the P pieces of alternative temperature information, including the following steps: a j(th) speed value is determined according to temperature information of a j(th) temperature sensor among the N-M temperature sensors, to obtain N-M speed values, where j is 1, ..., N-M-1, and N-M; P speed values are determined according to the P pieces of alternative temperature information; and a maximum speed value among the N-M speed values and the P speed values is determined as the second speed value.

In an exemplary embodiment, after the maximum speed value among the N-M speed values and the P speed values is determined as the second speed value, the method further includes the following steps: a first target time point is determined, where the first target time point is a start time point when the second speed value is determined according to the temperature information of the N-M temperature sensors and the P pieces of alternative temperature information; a time difference between a specified time point and the first target time point is determined to obtain a first target time difference, where the specified time point is a time point when the fan of the server is to be controlled to rotate according to a determined speed value; and a speed value compensation amount is determined according to the first target time difference, and compensation processing is performed on the fan speed value according to the speed value compensation amount to update the second speed value.

Obviously, the embodiments described above are merely some embodiments of the present disclosure but not all the embodiments thereof. To better understand the above method, the following describes the above process with reference to the embodiments, but this is not intended to limit the technical solutions of the embodiments of the present disclosure. Optionally, when the controller is a BMC (baseboard management controller):
I. Heat dissipation speeds of abnormal temperature acquisition scenarios are more accurately controlled according to the temperature anomaly severity level.
   1. The BMC classifies temperature levels according to the importance of the temperatures thereof. For example, core temperatures such as ambient temperature/CPU temperature/memory temperature are the most important; the temperature loss thereof will cause extremely serious impact on the heat dissipation of the system, and such a temperature anomaly severity level is high (for example, Level 9). For some temperatures of general importance, such as hard disk temperature/network card temperature, the temperature loss thereof will cause moderate impact on the heat dissipation of the system, and such temperatures are categorized as having a "moderate impact" and the temperature anomaly severity level may be set to Level 5. The temperatures of small controllers on the mainboard are less important, and the controllers have no significant risk of overheating and burning out. Thus, the temperature loss thereof will cause minor impact on the heat dissipation of the system, and the temperature anomaly severity level may be set to Level 1. When the system operates normally, there is no temperature loss, and there is no need to activate speed control for abnormal conditions, so the temperature anomaly severity level is set to Level 0 under normal conditions.
   2. When the BMC calculates the fan speed according to the temperatures, if the abnormal temperature level in the system is non-zero, the abnormal speed control calculation is activated. If multiple anomaly severity levels exist at the same time, a highest severity level is selected, and the calculation method corresponding to the level is invoked according to the current anomaly level. The predetermined calculation methods for different levels follow the rule of "high levels overriding lower levels". For example, if the linear equation (Y = KX + B) is used as the calculation method, the speed value calculated by the method for a high anomaly level will be greater than that calculated by the method for a low anomaly level under same conditions. For example, an equation for Level 1 is Y = X + 1, while an equation for Level 9 is Y = 9X + 9; and a same rule applies to the PID algorithm.
   3. As shown in FIG. 7, the BMC system compares the fan speed control value calculated by the PID algorithm under normal temperature conditions with the fan speed control value triggered under abnormal temperature levels, and a higher value of the two is selected for fan speed control.
II. Delay compensation.

Air-cooled server systems are currently the most mainstream type of server systems. In terms of heat dissipation speed control, the BMC generally serves as a main controller. Referring to FIG. 8, the BMC cyclically collects data from all temperature points in the system that require heat dissipation, continuously calculates the fan speed according to an algorithm, and finally sets the speeds to the fans in a physical way. Then, the fans rotate to dissipate heat from the system. The ultimate goal of the PID algorithm is to maintain heat dissipation stability. However, it may be clearly seen from FIG. 8 that there are two significant time delays in the server system: one is the time delay for the BMC to cyclically acquire temperature data (hereinafter collectively referred to as "temperature delay"), and the other is the delay for the BMC to cyclically calculate the speeds according to the temperatures and set the speeds to the fans (hereinafter collectively referred to as "calculation delay"). These two delays will seriously disrupt the stability, that is, when the BMC calculates the fan speeds according to the temperatures, the actual temperature may have already changed, and the calculation delay further increases the possibility of such changes. If there is a significant temperature change within a delay period, this may lead to unstable heat dissipation or fluctuating fan speeds. By introducing the concepts of the two heat dissipation delays and integrating a series of subsequent algorithm mechanisms, this application achieves a more stable and smooth speed control of the PID algorithm.
1. When the BMC acquires the temperature, a temperature acquisition timestamp record is added and may be stored in the transitory memory and non-transitory memory of the system. The significance of this timestamp is to record the time when each successful temperature acquisition occurs, thereby adding the concept of temperature time throughout the heat dissipation process.
2. After the BMC calculates the fan speeds and successfully sets the fan speeds, the timestamp record is added and may be stored in the transitory memory and non-transitory memory of the system. The significance of this timestamp is to record the time when the fan truly starts to play a heat dissipation role after each successful speed calculation and speed setting.
3. Temperature delay calculation: when the BMC is about to perform calculations after acquiring the temperature, the timestamp recorded in step 1 is subtracted from the current timestamp, and the resulting difference is the temperature delay.
4. Calculation delay calculation: the recorded timestamp is subtracted from the current timestamp, and the resulting difference is the calculation delay.
5. Temperature delay compensation: compensation trigger conditions may be selectively triggered threshold-based compensation. For example, each type of temperature has a threshold according to the importance thereof, compensation is activated when important temperatures such as CPU temperature are delayed by 100 milliseconds, and compensation is activated only after other less important temperatures are delayed by 1 second. Alternatively, the temperature delay may be used as a parameter and incorporated in each compensation. The calculation method for a temperature delay compensation value or ratio is as follows: predictive compensation, that is, the trend of multiple previous temperature changes is analyzed according to the algorithm, for example, a temperature change slope shows a sharp increase, a relatively stable increase, or a sharp decrease; then the possible temperature change during the delay period is predicated according to "change slope * temperature delay"; and finally the predicted temperature change is incorporated into the PID calculation. Additionally, a temperature invalidation determining threshold may be set according to temperature importance. For example, CPU temperature is of high importance; if the temperature delay of the CPU temperature exceeds 3 seconds, even the temperature change is predicted, the actual temperature change thereof may not be reflected. In this case, if the temperature exceeds the threshold, the temperature should be directly determined as being invalid, and the heat dissipation system should enter an abnormal mode. According to the temperature importance, the fan speed is either set to the maximum speed or the increased speed accordingly to prevent the system from overheating.
6. Delay compensation calculation: compensation trigger conditions may be selectively triggered threshold-based compensation. For example, delay compensation is activated only when the time since the last calculation delay exceeds 1 second; alternatively, the calculation delay may be used as a parameter and incorporated in each calculation. The calculation method for a calculation delay compensation value or ratio is as follows: predictive compensation, that is, the trend of changes in final fan speeds from previous several instances is analyzed according to the algorithm, for example, a speed change slope shows a sharp increase, a relatively stable increase, or a sharp decrease; and then the most likely required speed change is predicated during the delay period according to "change slope * calculation delay", and the speed change is directly added to the speed calculated in this time to achieve predictive speed control. Additionally, a speed invalidation determining threshold may be set as needed. For example, if the calculation delay since the last time is more than 10 seconds, it may be inferred that the heat dissipation of the system is out of control. In this case, prediction may not achieve good results, but may instead increase the possibility of the heat dissipation failure of the system. Therefore, the system fans should be forced to dissipate heat at maximum capacity to prevent the system from overheating.

It should be noted that this solution also has the following advantages:
1. According to the anomaly severity level differentiation mechanism, heat dissipation anomalies are classified, avoiding directly setting the fan speed to the maximum speed. Therefore, the server system may still maintain stable operation to the greatest extent even when entering an abnormal heat dissipation mode, reducing unnecessary increases in fan speed and power consumption.
2. The concepts of temperature delay and calculation delay are introduced for the heat dissipation of the server. Although delays are unavoidable, predictions may be made based on these delays; through delay prediction calculations, the entire heat dissipation of the system may be more smooth and precise, thereby reducing server power consumption and noise. Additionally, the concept of delay invalidation is introduced into this solution, avoiding the risk of heat dissipation failure caused by excessive temperature delay and calculation delay, and making the heat dissipation of the server more efficient and stable.

Optionally, referring to FIG. 3, when a component temperature sensor malfunctions, the temperature sensor may not be used to control the fan speed. The backup temperature sensor (namely, the aforementioned alternative temperature information) will replace the component temperature sensor to control the fan speed, ensuring the normal operation of the server.

Meanwhile, referring to FIG. 4, the fan is designed with a backup fan and may achieve intelligent speed control according to the temperature inside the chassis, thereby preventing the device from the risk of high temperatures.

Through the descriptions of the foregoing implementations, a person skilled in the art may clearly understand that the methods according to the foregoing embodiments may be implemented by using software in addition to a necessary general-purpose hardware platform. Certainly, the methods may alternatively be implemented by using hardware. However, in many cases, the former is a better implementation. Based on such an understanding, the technical solutions of this application essentially or the part contributing to the prior art may be implemented in a form of a software product. The software product is stored in a storage medium (for example, a ROM /RAM, a magnetic disk, or an optical disc), and includes several instructions for instructing a terminal device (which may be a mobile phone, a computer, a server, a network device, or the like) to perform the methods described in embodiments of this application.

In the embodiment, an apparatus for controlling a fan is further provided and is configured to implement the foregoing embodiments and optional implementations. Details are not described again for those that are already described. As used in the following, the term "module" may be a combination of software and/or hardware that implements a predetermined function. Although the module described in the following embodiment is preferably implemented by software, an implementation by hardware or a combination of software and hardware is also possible and conceived.

FIG. 9 is a block diagram of a structure of an apparatus for controlling a fan according to an embodiment of this application; and the device includes:
a first acquisition module 92, configured to acquire temperature information of N temperature sensors in a server, where N is a positive integer greater than or equal to 2, and monitored objects of the N temperature sensors include components of the server and/or an environment in which the server is located;
a second acquisition module 94, configured to: in a case that temperature information of M temperature sensors among the N temperature sensors is abnormal, acquire M pieces of alternative temperature information corresponding to the M temperature sensors, where a m(th) piece of alternative temperature information among the M pieces of alternative temperature information is used to reflect a temperature of a monitored object corresponding to a m(th) temperature sensor among the M temperature sensors, and M is a positive integer greater than or equal to 1 and less than or equal to N;
a controlling module 96, configured to: determine a fan speed value according to temperature information of N-M temperature sensors and the M pieces of alternative temperature information, and control a fan of the server to rotate at the fan speed value.

Through the device, when the M temperature sensors do not read temperature information or encounter other malfunctions, corresponding alternative temperature information may be used to calculate the fan speed value, so that the fan speed value calculated by the controller is more accurate, that is, the rotation of the fan may be more accurately controlled. Thus, this application solves a problem that the rotation of the fan may not be accurately controlled when the temperature of components inside a server is abnormal. This ensures that the system does not overheat due to remain at an abnormal temperature for a long time, and the heat dissipation system of the server may still function effectively, thereby avoiding a decrease in heat dissipation efficiency, and enhancing the stability and fault tolerance of the system.

In an exemplary embodiment, the second acquisition module 94 is further configured to: according to a position of the monitored object of the m(th) temperature sensor among the M temperature sensors, determine a temperature detector on a mainboard of the server, where a distance between the temperature detector and the monitored object is less than a preset distance; and according to temperature information of the temperature detector, determine alternative temperature information corresponding to the m(th) temperature sensor.

In an exemplary embodiment, the controlling module 96 includes: a first determining unit, configured to: determine a j(th) speed value according to temperature information of a j(th) temperature sensor among the N-M temperature sensors, to obtain N-M speed values, where j is 1, ..., N-M-1, and N-M; determine M speed values according to the M pieces of alternative temperature information; and determine a maximum speed value among the N-M speed values and the M speed values as the fan speed value.

In an exemplary embodiment, the first determining unit is further configured to: determine the j(th) speed value according to a proportional-integral-derivative control algorithm and the temperature information of the j(th) temperature sensor among the N-M temperature sensors.

In an exemplary embodiment, the first determining unit is further configured to: before the j(th) speed value is determined according to the temperature information of the j(th) temperature sensor among the N-M temperature sensors, determine a time difference between a j(th) reference time point and a j(th) time point to obtain a j(th) time difference, where the j(th) time point is a time point when the temperature information of a j(th) temperature sensor is acquired, and the j(th) reference time point is a start time point when the j(th) speed value is determined according to the temperature information of the j(th) temperature sensor. The device further includes a compensation module, where the compensation module includes a second determining unit, and the second determining unit is configured to: determine a j(th) temperature compensation amount according to the j(th) time difference, and perform compensation processing on the temperature information of the j(th) temperature sensor according to the j(th) temperature compensation amount to update the acquired temperature information of the j(th) temperature sensor.

In an exemplary embodiment, the compensation module is further configured to: determine a j(th) first time threshold corresponding to the j(th) temperature sensor; in a case that the j(th) time difference is greater than or equal to the j(th) first time threshold, determine the j(th) temperature compensation amount according to the j(th) time difference, and perform the compensation processing on the temperature information of the j(th) temperature sensor according to the j(th) temperature compensation amount; and in a case that the j(th) time difference is less than the j(th) first time threshold, perform no compensation processing on the temperature information of the j(th) temperature sensor.

In an exemplary embodiment, the compensation module is further configured to: determine a j(th) second time threshold corresponding to the j(th) temperature sensor, where the j(th) second time threshold is greater than the j(th) first time threshold; in a case that the j(th) time difference is greater than or equal to the j(th) first time threshold and less than the j(th) second time threshold, determine the j(th) temperature compensation amount according to the j(th) time difference, and perform the compensation processing on the temperature information of the j(th) temperature sensor according to the j(th) temperature compensation amount.

In an exemplary embodiment, a compensation module is configured to: in a case that the j(th) time difference is greater than or equal to the j(th) second time threshold, determine an importance degree of the temperature information of the j(th) temperature sensor according to attribute information of the j(th) temperature sensor; determine the j(th) speed value according to the importance degree of the temperature information of the j(th) temperature sensor; and prohibit from determining the j(th) speed value according to the temperature information of the j(th) temperature sensor among the N-M temperature sensors.

In an exemplary embodiment, the compensation module is further configured to: determine a first change rate of a temperature detected by the j(th) temperature sensor within a preset time period before the j(th) time point; and multiply the first change rate by the j(th) time difference to obtain the j(th) temperature compensation amount.

In an exemplary embodiment, the compensation module is further configured to: after a maximum speed value among the N-M speed values and the M speed values is determined as the fan speed value, determine a target time point, where the target time point is a start time point when the fan speed value is determined according to the temperature information of the N-M temperature sensors and the M pieces of alternative temperature information; determine a time difference between a specified time point and the target time point to obtain a target time difference, where the specified time point is a time point when the fan of the server is to be controlled to rotate according to a determined speed value; and determine a speed value compensation amount according to the target time difference, and perform compensation processing on the fan speed value according to the speed value compensation amount to update the fan speed value.

In an exemplary embodiment, the compensation module is further configured to: in a case that the target time difference is greater than or equal to a first preset threshold, determine the speed value compensation amount according to the target time difference, and perform the compensation processing on the fan speed value according to the speed value compensation amount; and in a case that the target time difference is less than the first preset threshold, perform no compensation processing on the fan speed value.

In an exemplary embodiment, the compensation module is further configured to: in a case that the target time difference is greater than or equal to the first preset threshold and less than a second preset threshold, determine the speed value compensation amount according to the target time difference, and perform the compensation processing on the fan speed value according to the speed value compensation amount, where the second preset threshold is greater than the first preset threshold.

In an exemplary embodiment, the compensation module is further configured to: in a case that the target time difference is greater than or equal to the second preset threshold, update the fan speed value to the maximum speed value of the fan of the server.

In an exemplary embodiment, the compensation module is further configured to: determine a second change rate of a speed of the fan of the server within a preset time period before the specified time point; and multiply the second change rate by the target time difference to obtain the speed value compensation amount.

In an exemplary embodiment, a first determining unit is further configured to: in a case that only P pieces of alternative temperature information corresponding to P temperature sensors among the M temperature sensors are acquired, a first speed value is determined according to attribute information of M-P temperature sensors, and a second speed value is determined according to the temperature information of the N-M temperature sensors and the P pieces of alternative temperature information, where P is an integer greater than or equal to 0 and less than M, and the attribute information of the temperature sensors is used to indicate the monitored objects of the temperature sensors; and the controlling module 96 further includes: a controlling unit, configured to: control the fan of the server to rotate at a target speed value, where the target speed value is a maximum value between the first speed value and the second speed value.

In an exemplary embodiment, the first determining unit is further configured to: determine an abnormal temperature level of the server according to the attribute information of the M-P temperature sensors to obtain a target abnormal temperature level, and determine a corresponding target speed value calculation algorithm according to the target abnormal temperature level; and determine the first speed value according to the target speed value calculation algorithm and an average temperature of a chassis of the server.

In an exemplary embodiment, the first determining unit is further configured to: determine M-P abnormal temperature levels corresponding to the M-P temperature sensors according to the attribute information of the M-P temperature sensors, where an abnormal temperature level of an i(th) temperature sensor among the M-P temperature sensors is determined according to attribute information of the i(th) temperature sensor, and i is a positive integer greater than or equal to 1 and less than or equal to M-P; and determine a highest level among the M-P abnormal temperature levels as the target abnormal temperature level.

It should be noted that the foregoing modules may be implemented by software or hardware, and the latter may be implemented in the following manner, but is not limited thereto: the foregoing modules are all located in a same processor, or the foregoing modules are separately located in different processors in a form of a random combinations.

An embodiment of this application further provides a non-transitory computer-readable storage medium. The non-transitory computer-readable storage medium stores a computer program. When the computer program is set to be run, steps in any one of the method embodiments are implemented.

Optionally, in the embodiment, the computer program may be set to perform the following steps:
S1: Temperature information of N temperature sensors in a server is acquired, where N is a positive integer greater than or equal to 2, and monitored objects of the N temperature sensors include components of the server and/or an environment in which the server is located.
S2: in a case that temperature information of M temperature sensors among the N temperature sensors is abnormal, M pieces of alternative temperature information corresponding to the M temperature sensors are acquired, where a m(th) piece of alternative temperature information among the M pieces of alternative temperature information is used to reflect a temperature of a monitored object corresponding to a m(th) temperature sensor among the M temperature sensors, and M is a positive integer greater than or equal to 1 and less than or equal to N.
S3: a fan speed value is determined according to temperature information of N-M temperature sensors and the M pieces of alternative temperature information, and a fan of the server is controlled to rotate at the fan speed value.

In an example embodiment, the non-transitory computer readable storage medium may include but is not limited to any storage medium that may store the computer program, for example, a USB flash drive, a read-only memory (Read-Only Memory, ROM for short), a random access memory (Random Access Memory, RAM for short), a removable hard disk, a magnetic disk, or an optical disc.

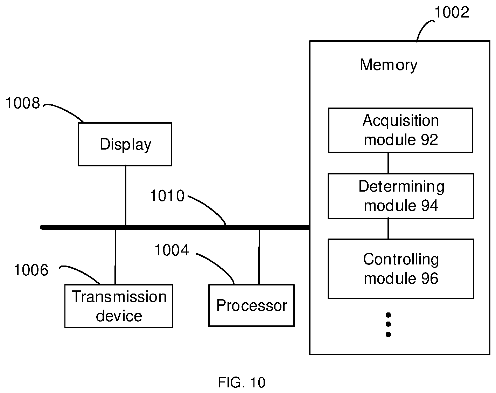

An embodiment of this application further provides an electronic device. As shown in FIG. 10, the electronic device includes a memory 1002 and a processor 1004. The memory 1002 stores a computer program. The processor 1004 is set to run the computer program to perform steps in any one of the foregoing method embodiments.

Optionally, in the embodiment, the processor 1004 may be set to run the computer program to perform the following steps:
S1: Temperature information of N temperature sensors in a server is acquired, where N is a positive integer greater than or equal to 2, and monitored objects of the N temperature sensors include components of the server and/or an environment in which the server is located.
S2: in a case that temperature information of M temperature sensors among the N temperature sensors is abnormal, M pieces of alternative temperature information corresponding to the M temperature sensors are acquired, where a m(th) piece of alternative temperature information among the M pieces of alternative temperature information is used to reflect a temperature of a monitored object corresponding to a m(th) temperature sensor among the M temperature sensors, and M is a positive integer greater than or equal to 1 and less than or equal to N.
S3: a fan speed value is determined according to temperature information of N-M temperature sensors and the M pieces of alternative temperature information, and a fan of the server is controlled to rotate at the fan speed value.

For a specific example in this embodiment, refer to the examples described in the foregoing embodiments and example implementations. In this embodiment, details are not described herein again.

Optionally, a person of ordinary skill in the art may understand that the structure shown in FIG. 10 is merely an example, and does not constitute a limitation on the structure of the electronic device. For example, the electronic device may further include more or fewer components (such as network interfaces) than those shown in FIG. 10, or have a configuration different from that shown in FIG. 10.

The memory 1002 may be configured to store a software program and a module, for example, a program instruction/module corresponding to the method for controlling the fan and the apparatus for controlling the fan in embodiments of this application. The processor 1004 runs the software program and the module stored in the memory 1002, to perform various function applications and data processing, that is, implement the method for controlling the fan. The memory 1002 may include a high-speed random access memory, and may further include a non-transitory memory, for example, one or more magnetic storage devices, a flash memory, or another non-transitory solid-state memory. In some instances, the memory 1002 may further include memories disposed remotely relative to the processor 1004. These remote memories may be connected to the terminal through a network. Instances of the network include but are not limited to the Internet, an intranet, a local area network, a mobile communication network, and a combination thereof. The memory 1002 may specifically but is not limited to be configured to store system configuration files and other information. As an instance, as shown in FIG. 10, the memory 1002 may include but is not limited to the first acquisition module 92, the second acquisition module 94, and the controlling module 96 of the apparatus for controlling the fan. In addition, the memory may further include but is not limited to other module units in the apparatus for controlling the fan. In the instance, details are not described herein again.

Optionally, the transmission device 1006 is configured to receive or send data through a network. A specific instance of the network may include a wired network and a wireless network. In an instance, the transmission device 1006 includes a network interface controller (Network Interface Controller, NIC for short), and may be connected to another network device and a router via a network cable to communicate with the Internet or the local area network. In an instance, the transmission device 1006 may be a radio frequency (Radio Frequency, RF for short) module, and is configured to communicate with the Internet in a wireless manner.

In addition, the electronic device further includes a display 1008 and a connection bus 1010; and the connection bus is configured to connect various module components within the electronic device.

An embodiment of this application further provides a computer program product, and the computer program product includes a computer program. When the computer program is executed by a processor, steps in any one of the method embodiments are implemented.

An embodiment of this application further provides another computer program product. The computer program product includes a non-transitory computer-readable storage medium that stores a computer program. When the computer program is executed by a processor, steps in any one of the method embodiments are implemented.

An embodiment of this application further provides a computer program including a computer instruction; and the computer instruction is stored in a non-transitory computer-readable storage medium. A processor of a computer device reads the computer instruction from the non-transitory computer-readable storage medium and executes the computer instruction, so that the computer device executes steps in any one of the method embodiments.

It is clear that a person skilled in the art should understand that the foregoing modules or steps in this application may be implemented by using a general-purpose computing device. The foregoing modules or steps may be centralized on a single computing device, or distributed on a network including a plurality of computing devices. The foregoing modules or steps may be implemented by using program code executable by the computing device. Therefore, the foregoing modules or steps may be stored in a storage device and performed by the computing device. In addition, in some cases, the shown or described steps may be performed in an order difference from that described herein. Alternatively, the foregoing modules or steps may be respectively made into individual integrated circuit modules, or a plurality of modules or steps in the foregoing modules or steps may be made into a single integrated circuit module for implementation. In this way, this application is not limited to any particular combination of hardware and software.

The foregoing descriptions are merely preferred embodiments of this application, and are not intended to limit this application. For a person skilled in the art, various changes and variations may be made to this application. Any modification, equivalent replacement, improvement, or the like made without departing from the principle of this application shall fall within the protection scope of this application.

## Claims

1. A method for controlling a fan,
**characterized by** comprising:
acquiring temperature information of N temperature sensors in a server, wherein N is a positive integer greater than or equal to 2, and monitored objects of the N temperature sensors comprise components of the server and/or an environment in which the server is located;
in a case that temperature information of M temperature sensors among the N temperature sensors is abnormal, acquiring M pieces of alternative temperature information corresponding to the M temperature sensors, wherein a m(th) piece of alternative temperature information among the M pieces of alternative temperature information is used to reflect a temperature of a monitored object corresponding to a m(th) temperature sensor among the M temperature sensors, and M is a positive integer greater than or equal to 1 and less than or equal to N; and
determining a fan speed value according to temperature information of N-M temperature sensors and the M pieces of alternative temperature information, and controlling a fan of the server to rotate at the fan speed value.

2. The method as claimed in claim 1,
**characterized in that** acquiring the M pieces of alternative temperature information corresponding to the M temperature sensors comprises:
according to a position of the monitored object of the m(th) temperature sensor among the M temperature sensors, determining a temperature detector on a mainboard of the server, wherein a distance between the temperature detector and the monitored object is less than a preset distance; and
according to temperature information of the temperature detector, determining alternative temperature information corresponding to the m(th) temperature sensor.

3. The method as claimed in claim 1,
**characterized in that** determining the fan speed value according to the temperature information of N-M temperature sensors and the M pieces of alternative temperature information comprises:
determining a j(th) speed value according to temperature information of a j(th) temperature sensor among the N-M temperature sensors, to obtain N-M speed values, wherein j is 1, ..., N-M-1, and N-M;
determining M speed values according to the M pieces of alternative temperature information; and
determining a maximum speed value among the N-M speed values and the M speed values as the fan speed value.

4. The method as claimed in claim 3,
**characterized in that** determining the j(th) speed value according to the temperature information of the j(th) temperature sensor among the N-M temperature sensors comprises:
determining the j(th) speed value according to a proportional-integral-derivative control algorithm and the temperature information of the j(th) temperature sensor among the N-M temperature sensors.

5. The method as claimed in claim 3,
**characterized in that** before determining the j(th) speed value according to the temperature information of the j(th) temperature sensor among the N-M temperature sensors, the method further comprises:
determining a time difference between a j(th) reference time point and a j(th) time point to obtain a j(th) time difference, wherein the j(th) time point is a time point when the temperature information of a j(th) temperature sensor is acquired, and the j(th) reference time point is a start time point when the j(th) speed value is determined according to the temperature information of the j(th) temperature sensor; and
determining a j(th) temperature compensation amount according to the j(th) time difference, and performing compensation processing on the temperature information of the j(th) temperature sensor according to the j(th) temperature compensation amount to update the temperature information of the j(th) temperature sensor which is acquired.

6. The method as claimed in claim 5,
**characterized in that** determining the j(th) temperature compensation amount according to the j(th) time difference, and performing the compensation processing on the temperature information of the j(th) temperature sensor according to the j(th) temperature compensation amount comprises:
determining a j(th) first time threshold corresponding to the j(th) temperature sensor;
in a case that the j(th) time difference is greater than or equal to the j(th) first time threshold, determining the j(th) temperature compensation amount according to the j(th) time difference, and performing the compensation processing on the temperature information of the j(th) temperature sensor according to the j(th) temperature compensation amount;
wherein in a case that the j(th) time difference is less than the j(th) first time threshold, the compensation processing is not performed on the temperature information of the j(th) temperature sensor.

7. The method as claimed in claim 5,
**characterized in that** determining the j(th) temperature compensation amount according to the j(th) time difference, and performing the compensation processing on the temperature information of the j(th) temperature sensor according to the j(th) temperature compensation amount comprises:
determining a j(th) first time threshold corresponding to the j(th) temperature sensor, and determining a j(th) second time threshold corresponding to the j(th) temperature sensor, wherein the j(th) second time threshold is greater than the j(th) first time threshold;
in a case that the j(th) time difference is greater than or equal to the j(th) first time threshold and less than the j(th) second time threshold, determining the j(th) temperature compensation amount according to the j(th) time difference, and performing the compensation processing on the temperature information of the j(th) temperature sensor according to the j(th) temperature compensation amount; wherein in a case that the j(th) time difference is less than the j(th) first time threshold, the compensation processing is not performed on the temperature information of the j(th) temperature sensor.

8. The method as claimed in claim 7,
**characterized in that** the method further comprises:
in a case that the j(th) time difference is greater than or equal to the j(th) second time threshold, determining an importance degree of the temperature information of the j(th) temperature sensor according to attribute information of the j(th) temperature sensor; and
determining the j(th) speed value according to the importance degree of the temperature information of the j(th) temperature sensor, and prohibiting from determining the j(th) speed value according to the temperature information of the j(th) temperature sensor among the N-M temperature sensors.

9. The method as claimed in claim 5,
**characterized in that** determining the j(th) temperature compensation amount according to the j(th) time difference comprises:
determining a first change rate of a temperature detected by the j(th) temperature sensor within a preset time period before the j(th) time point; and
multiplying the first change rate by the j(th) time difference to obtain the j(th) temperature compensation amount.

10. The method as claimed in claim 3,
**characterized in that** after determining the maximum speed value among the N-M speed values and the M speed values as the fan speed value, the method further comprises:
determining a target time point, wherein the target time point is a start time point when the fan speed value is determined according to the temperature information of the N-M temperature sensors and the M pieces of alternative temperature information;
determining a time difference between a specified time point and the target time point to obtain a target time difference, wherein the specified time point is a time point when the fan of the server is to be controlled to rotate according to a determined speed value; and
determining a speed value compensation amount according to the target time difference, and performing compensation processing on the fan speed value according to the speed value compensation amount to update the fan speed value.

11. The method as claimed in claim 10,
**characterized in that** determining the speed value compensation amount according to the target time difference, and performing the compensation processing on the fan speed value according to the speed value compensation amount comprises:
in a case that the target time difference is greater than or equal to a first preset threshold, determining the speed value compensation amount according to the target time difference, and performing the compensation processing on the fan speed value according to the speed value compensation amount; wherein in a case that the target time difference is less than the first preset threshold, the compensation processing is not performed on the fan speed value.

12. The method as claimed in claim 11,
**characterized in that** determining the speed value compensation amount according to the target time difference, and performing the compensation processing on the fan speed value according to the speed value compensation amount comprises:
in the case that the target time difference is greater than or equal to the first preset threshold and less than a second preset threshold, determining the speed value compensation amount according to the target time difference, and performing the compensation processing on the fan speed value according to the speed value compensation amount, wherein the second preset threshold is greater than the first preset threshold.

13. The method as claimed in claim 12,
**characterized in that** the method further comprises:
in a case that the target time difference is greater than or equal to the second preset threshold, updating the fan speed value to the maximum speed value of the fan of the server.

14. The method as claimed in claim 10,
**characterized in that** determining the speed value compensation amount according to the target time difference comprises:
determining a second change rate of a speed of the fan of the server within a preset time period before the specified time point; and
multiplying the second change rate by the target time difference to obtain the speed value compensation amount.

15. The method as claimed in claim 1,
**characterized in that** the method further comprises:
in a case that only P pieces of alternative temperature information corresponding to P temperature sensors among the M temperature sensors are acquired, determining a first speed value according to attribute information of M-P temperature sensors, and determining a second speed value according to the temperature information of the N-M temperature sensors and the P pieces of alternative temperature information, wherein P is an integer greater than or equal to 0 and less than M, and the attribute information of the temperature sensors is used to indicate the monitored objects of the temperature sensors; and
controlling the fan of the server to rotate at a target speed value, wherein the target speed value is a maximum value between the first speed value and the second speed value.

16. The method as claimed in claim 15,
**characterized in that** determining the first speed value according to the attribute information of the M-P temperature sensors comprises:
determining an abnormal temperature level of the server according to the attribute information of the M-P temperature sensors to obtain a target abnormal temperature level, and determining a target speed value calculation algorithm corresponding to the target abnormal temperature level according to the target abnormal temperature level; and
determining the first speed value according to the target speed value calculation algorithm and an average temperature of a chassis of the server.

17. The method as claimed in claim 16,
**characterized in that** determining the abnormal temperature level of the server according to the attribute information of the M-P temperature sensors comprises:
determining M-P abnormal temperature levels corresponding to the M-P temperature sensors according to the attribute information of the M-P temperature sensors, wherein an abnormal temperature level of an i(th) temperature sensor among the M-P temperature sensors is determined according to attribute information of the i(th) temperature sensor, and i is a positive integer greater than or equal to 1 and less than or equal to M-P; and
determining a highest level among the M-P abnormal temperature levels as the target abnormal temperature level.

18. A non-transitory computer-readable storage medium,
**characterized in that** the non-transitory computer-readable storage medium stores a computer program, wherein when the computer program is executed by a processor, steps of the method as claimed in any one of claims 1 to 17 are implemented.

19. An electronic device, comprising a memory, a processor, and a computer program that is stored in the memory and executable on the processor,
**characterized in that** when the computer program is executed by the processor, steps of the method as claimed in any one of claims 1 to 17 are implemented.

20. A computer program product comprising a computer program, **characterized in that** when the computer program is executed by a processor, the method as claimed in any one of claims 1 to 17 is implemented.
